# DEMANDE DE BREVET EUROPEEN

(11) **EP 0 926 623 A1**
(43) Date de publication de la demande: **30.06.1999**
(21) Numéro de dépôt: 97122712.9
(22) Date de dépôt: 23.12.1997
(51) Int. Cl.: G06K 19/07

(54) **Transpondeur actif commutable en transpondeur passif**

(71) Demandeur: EM Microelectronic-Marin SA, 2074 Marin (CH)
(72) Inventeur: Roz, Thierry, 2515 Prêles (CH)
(74) Mandataire: Patry, Didier Marcel Pierre

(57) **Abrégé**

La présente invention concerne un transpondeur actif (10) comprenant une antenne (3), un moyen de traitement (5) agencé pour pouvoir recevoir et fournir à l'antenne des données d'identification à émettre, et un moyen d'alimentation (7). Ce transpondeur est caractérisé en ce qu'il comprend en outre un moyen de stockage (12) agencé pour pouvoir stocker de l'énergie électrique, un moyen de comparaison (14) agencé pour pouvoir comparer la valeur de signal d'alimentation électrique fournie à une valeur prédéterminée (Vth), et un moyen de commutation (16) agencé pour pouvoir connecter le moyen de traitement au moyen de stockage ou au moyen d'alimentation, en fonction du résultat de la comparaison. Un avantage du moyen de commutation est de permettre au transpondeur de déterminer si la valeur de tension fournie par le moyen d'alimentation, est suffisante pour assurer l'alimentation électrique des différents composants du transpondeur, notamment pour réaliser les fonctions élémentaires désirées.

## Description

La présente invention concerne le domaine des transpondeurs actifs et, plus précisément, des transpondeurs actifs commutables en transpondeurs passifs.

Il existe classiquement un grand nombre de dispositifs portatifs pour réaliser l'identification à distance d' un objet inconnu. Typiquement, des données sont transférées, sous forme de signaux radioélectriques, entre une station de base fixe servant d'émetteur-récepteur, et un dispositif portatif que l'on réalise usuellement en utilisant un transpondeur.

On doit distinguer classiquement deux types de transpondeurs.

On qualifie de "passif " un transpondeur qui convertit un signal radioélectrique provenant d'une station de base, en une tension électrique qui fournit ensuite la puissance électrique nécessaire au fonctionnement du transpondeur. A cet effet, un transpondeur passif comprend une antenne agencée pour pouvoir recevoir et émettre des signaux radioélectriques contenant des données, un condensateur de stockage connecté à l'antenne, pour pouvoir stocker de l'énergie électrique reçue par l'antenne, et un circuit intégré connecté à l'antenne et au condensateur de stockage, pour pouvoir traiter les données reçues par l'antenne, et fournir à cette dernière d'autres données à émettre sous forme de signal radioélectrique. On note que le condensateur de stockage réalise, dans un tel transpondeur, la fourniture de l'alimentation électrique du circuit intégré.

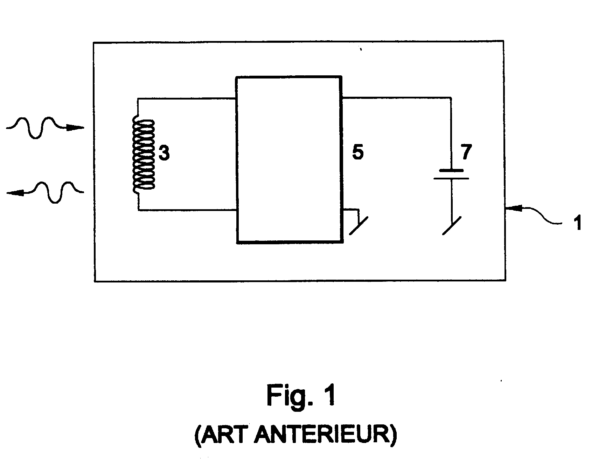

On qualifie de "actif" le transpondeur tel que décrit ci-dessous. La figure 1 représente un tel transpondeur désigné par la référence 1. Ce transpondeur comprend une antenne 3 agencée pour pouvoir recevoir et émettre des signaux radioélectriques contenant des données, un circuit intégré 5 connecté à l'antenne 3, pour pouvoir traiter des données reçues par l'antenne 3, et fournir à cette dernière d'autres données à émettre sous forme de signal radioélectrique. Le transpondeur actif 1 comprend en outre une source de puissance électrique interne, qui est communément réalisée par une batterie au lithium, désignée dans la figure 1 par la référence 7. On note que la batterie 7 réalise, dans un tel transpondeur, la fourniture de l'alimentation électrique des différents composants.

Des transpondeurs actifs sont utilisés pour transmettre des données sur de grandes distances. Par exemple, on utilise communément dans une clé pour réaliser la commande à distance de l'ouverture d'une porte de véhicule, sans qu'il y ait un contact matériel entre la porte et la clé, ni même une action de l'utilisateur sur cette clé.

Un inconvénient d'un tel transpondeur actif réside dans le fait qu'il fonctionne normalement, tant que la batterie fournit une tension électrique suffisante pour alimenter l'ensemble des composants du transpondeur. Ainsi, dans l'exemple déjà cité où un transpondeur actif est incorporé dans une clé, supposons que la batterie ne fournit plus un niveau de tension suffisant pour assurer le bon fonctionnement du transpondeur. Dans ce cas, le transpondeur ne permet plus de fournir la commande de l'ouverture de la porte, ce qui est généralement gênant pour l'utilisateur du véhicule.

Un objet de la présente invention est de prévoir un transpondeur actif palliant les inconvénients des transpondeurs actifs classiques, notamment relativement à son fonctionnement quand la batterie fournit une tension électrique insuffisante pour alimenter l'ensemble des composants du transpondeur.

Un autre objet de la présente invention est de prévoir un transpondeur actif répondant aux critères traditionnels dans l'industrie des semi-conducteurs, de complexité et de coût.

Ces objets, ainsi que d'autres, sont atteints par le transpondeur actif selon la revendication 1.

Un avantage du moyen de commutation du transpondeur selon la présente invention, est de permettre à ce transpondeur de déterminer si la valeur de tension fournie par le moyen d'alimentation, est suffisante pour assurer l'alimentation électrique des différents composants du transpondeur, notamment pour réaliser les fonctions élémentaires désirées.

Un autre avantage du moyen de commutation du transpondeur selon la présente invention, réside dans le fait que son agencement permet d'empêcher la mise en conduction d'un transistor parasite de type bipolaire vertical, quand les transistors à effet de champ de ce moyen sont bloqués.

Un autre avantage du moyen de commutation du transpondeur selon la présente invention, réside dans le fait que son agencement fournit une faible chute de tension entre ses bornes d'entrée et sa borne de sortie, ce qui permet de réaliser l'alimentation électrique du moyen de traitement à une tension qui est sensiblement égale à celle fournie par le moyen d'alimentation.

Un avantage du transpondeur selon la présente invention, réside dans le fait qu'il est constitué de composants usuellement réalisés dans l'industrie des semi-conducteurs, notamment par des étapes de fabrication d'une filière de type CMOS connue en soi.

Ces objets, caractéristiques et avantages, ainsi que d'autres, de la présente invention apparaîtront plus clairement à la lecture de la description détaillée d'un mode de réalisation préféré de l'invention, donné à titre d'exemple uniquement, en relation avec les figures jointes, parmi lesquelles :
- la figure 1 déjà citée représente un transpondeur actif classique;
- la figure 2 représente un transpondeur actif selon la présente invention; et
- la figure 3 représente un mode de réalisation préféré du moyen de commutation du transpondeur de la figure 2.

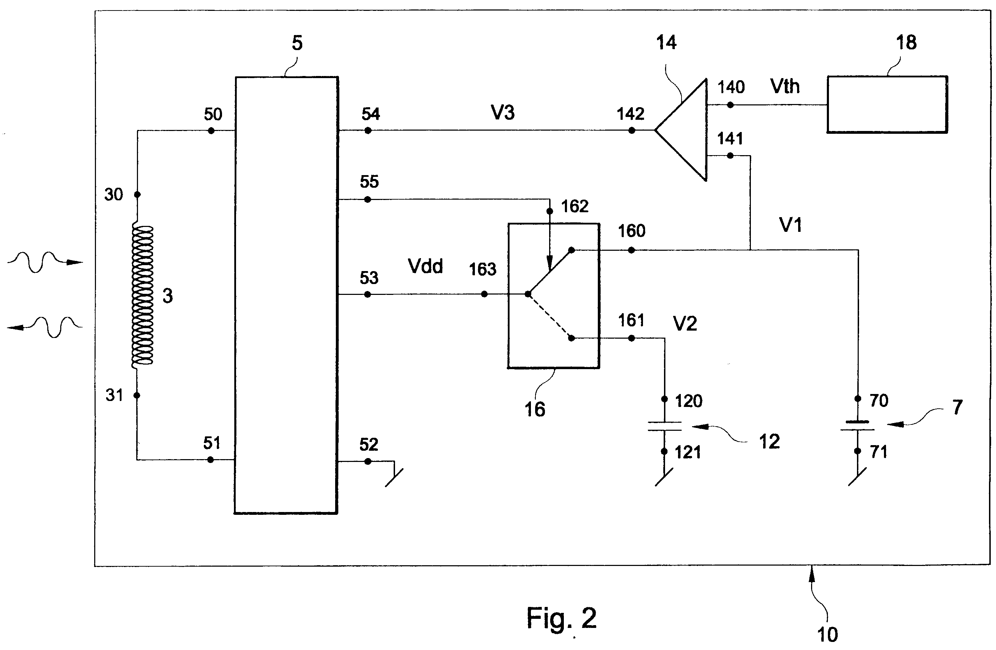

La figure 2 représente un transpondeur actif 10 selon la présente invention.

On note que le transpondeur représenté en figure 2 est proche du transpondeur 1 représenté en figure 1. Ainsi, par souci de simplicité, les composants représentés en figure 2 et désignés par les mêmes références que ceux représentés en figure 1, sont sensiblement identiques à ceux désignés en figure 1.

Comme le représente la figure 2, le transpondeur actif 10 comprend une antenne 3, un moyen de traitement 5, et un moyen d'alimentation 7.

L'antenne 3 est agencée pour pouvoir recevoir et émettre un signal radioélectrique contenant des données. L' antenne 3 comprend deux bornes de connexion 30 et 31 par lesquelles sont fournies, sous la forme d'un signal électrique, les données reçues ou les données à émettre.

On réalise de préférence l'antenne 3 en formant une bobine, comme cela est connu en soi.

Le moyen de traitement 5 est agencé pour pouvoir traiter les données reçues et fournir les données à émettre. A cet effet, le moyen de traitement 5 comprend deux bornes de connexion 50 et 51 connectées respectivement aux bornes 30 et 31 de l'antenne 3. En outre, le moyen de traitement 5 comprend une borne de masse 52 connectée à la masse du transpondeur 10, et une borne d'alimentation 53 destinée à recevoir la tension d'alimentation Vdd, comme cela sera décrit ci-après. Le moyen de traitement 5 comprend également deux bornes de connexion supplémentaires désignées 54 et 55.

On réalise de préférence le moyen de traitement 5 en formant un bloc logique classique et une interface classique disposée entre ce bloc et l'antenne 3.

Le moyen d'alimentation 7 est agencé pour pouvoir fournir une tension électrique V1 suffisante pour alimenter électriquement l'ensemble des composants du transpondeur 10. A cet effet, le moyen d'alimentation 7 comprend une borne de fourniture 70 pour fournir la tension V1, et une borne de masse 71 connectée à la masse du transpondeur 10.

On réalise de préférence le moyen d'alimentation 7 en utilisant une batterie au lithium classique.

Le transpondeur 10 comprend en outre un moyen de stockage 12, un moyen de comparaison 14, et un moyen de commutation 16.

Le moyen de stockage 12 est agencé pour pouvoir stocker de l'énergie électrique, et fournir une tension électrique V2. A cet effet, le moyen de stockage 12 comprend une borne de fourniture 120 pour fournir la tension V2, et une borne de masse 121 connectée à la masse du transpondeur 10.

On réalise de préférence le moyen de stockage 12 en formant un condensateur, comme cela est connu en soi.

Le moyen de comparaison 14 est agencé pour pouvoir comparer la tension électrique V1 à un seuil de tension prédéterminé Vth. A cet effet, le moyen de comparaison 14 comprend une première borne d'entrée 140 connectée à un moyen de mémorisation 18, pour recevoir le seuil Vth, et une seconde borne d'entrée 141 connectée à la borne 70 du moyen d'alimentation 7, pour recevoir la tension V1. Le moyen de comparaison 14 comprend également une borne de sortie 142 connectée à la borne 54 du moyen de traitement 5, pour fournir à ce moyen un signal électrique V3 contenant le résultat de la comparaison entre la tension V1 et le seuil Vth.

On note que la valeur du seuil Vth est choisie et mémorisée pour répondre à des critères prédéterminés de bon fonctionnement du transpondeur 10, c'est-à-dire pour déterminer si la valeur de tension fournie par la batterie est suffisante pour assurer l'alimentation électrique du transpondeur 10, nécessaire pour réaliser des fonctions désirées telle que la fourniture à distance d'un signal de commande de l'ouverture d'une porte de véhicule.

On réalise de préférence le moyen de comparaison 14 en utilisant un amplificateur opérationnel, comme cela est connu en soi.

Le moyen de commutation 16 est agencé pour pouvoir connecter le moyen de traitement 5 au moyen de stockage 12 ou au moyen d'alimentation 7, sous la commande du moyen de traitement 5, et en fonction du résultat de la comparaison de la tension V1 au seuil Vth. A cet effet, le moyen de commutation 16 comprend une première borne d'entrée 160 connectée à la borne 70 du moyen d'alimentation 7, pour recevoir la tension V1, une seconde borne d'entrée 161 connectée à la borne 120 du moyen de stockage 12, pour recevoir la tension V2, au moins une borne de commande 162 connectée à la borne 55 du moyen de traitement 5, pour recevoir de ce moyen un signal électrique de commande de commutation, et une borne de sortie 163 connectée à la borne 53, pour fournir au moyen de traitement 5 la tension Vdd nécessaire à son alimentation électrique.

On note que le moyen de traitement 5 est programmé de manière à pouvoir fournir, par la borne 55, la commande de commutation au moyen 16, en réponse au signal électrique V3 reçu par la borne 54.

On va décrire ci-après un mode de-réalisation préféré du moyen de commutation 16 du transpondeur 10.

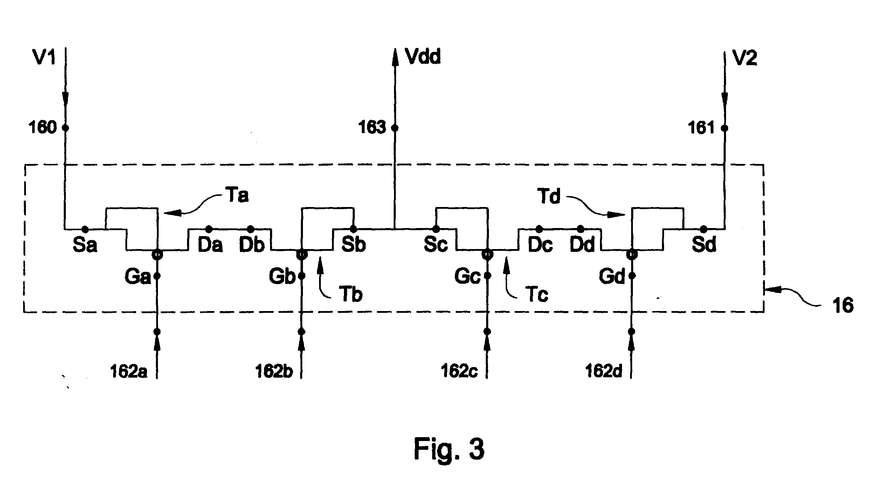

La figure 3 représente un schéma électrique du moyen de commutation 16.

Le moyen de commutation 16 est formé de quatre transistors Ta, Tb, Tc et Td qui, dans l'exemple représenté en figure 3, sont des transistors à effet de champ à canal de type P.

Les références Sa, Da et Ga désignent respectivement la borne de source, la borne de drain et la borne de grille du transistor Ta. On désignera de façon similaire les bornes de source, de drain et de grille des transistors Tb, Tc et Td.

Les transistors Ta à Td sont connectées en série, de la façon suivante. Les bornes Ga à Gd sont connectées respectivement à quatre bornes de commande désignées 162a à 162d, de sorte que chacun de ces transistors peut recevoir, du moyen de traitement 5, ladite commande de commutation, de manière à être conducteur ou bloqué. Les bornes Sa et Sd sont connectées respectivement aux bornes 160 et 161, pour recevoir respectivement les tensions V1 et V2. Les bornes Sb et Sc sont connectées à la borne 163 du moyen de commutation 16, et les bornes Da et Dc sont connectées respectivement aux bornes Db et Dd.

L'homme de l'art note que la chute de tension entre les bornes 163 et 160, et la bornes 163 et 161 est de l'ordre de 200 mV, dans le cas où on forme des transistors Ta à Td à canal de type P dans quatre caissons respectifs de type N faiblement dopé, ces caissons étant formés dans un substrat de silicium de type P faiblement dopé.

De préférence, on réalise l'ensemble des composants du transpondeur 10, en formant une structure intégrée par des étapes de fabrication d'une filière de type CMOS connue en soi. Typiquement, dans leur mode de réalisation préféré respectif susmentionné, on réalise de façon monolithique, dans un unique substrat semi-conducteur, le moyen de traitement 5, le moyen de stockage 12, le moyen de comparaison 14 et le moyen de commutation 16. A titre de variante, on peut prévoir de réaliser également de façon monolithique, en plus de ces composants, l'antenne 3.

L'homme de l'art note que l'agencement du moyen de commutation du transpondeur 10 est avantageux, puisqu'il empêche la mise en conduction d'un transistor parasite de type bipolaire vertical, quand les transistors à effet de champ de ce moyen sont bloqués. En effet, dans le cas décrit en relation avec la figure 3, ces transistors sont à canal de type P, la borne de drain Da est connectée avec la borne de drain Db, et la borne de drain Dc est connectée avec la borne de drain Dd. On rappellera qu'un transistor parasite de type bipolaire vertical associé à un transistor à effet de champ et à canal de type P devient conducteur seulement si la tension de drain de ce transistor est supérieure à la tension de source de l'ordre de 0,6 V. Or une telle mise en conduction ne peut se produire quand les transistors Ta et Tb, respectivement Tc et Td, sont bloqués, puisque les bornes de drain de ces transistors sont dans un état de haute impédance.

A titre de perfectionnement, on peut programmer le moyen de traitement 5 pour réaliser des fonctions spécifiques supplémentaires. Typiquement, le moyen de traitement 5 peut être programmé de manière à pouvoir commander, suite à la réception d'un signal de commande spécifique par l'antenne 3, la commutation du transpondeur 10 en transpondeur passif, indépendamment de la valeur de la tension V1 fournit par le moyen d'alimentation 7.

On va maintenant décrire le fonctionnement du transpondeur selon la présente invention, en se référant aux figures 2 et 3 décrites ci-dessus.

Considérons le cas où le moyen d'alimentation 7 fournit une tension V1 qui est supérieure au seuil Vth. Dans ce cas, la valeur de tension fournie par le moyen d'alimentation 7 est suffisante pour assurer l'alimentation électrique du transpondeur 10, nécessaire pour réaliser des fonctions désirées. En conséquence, le moyen de traitement 5 commande au moyen de commutation 16 la conduction des transistors Ta et Tb, et le blocage des transistors Tc et Td. Ainsi la tension Vdd est sensiblement égale à la tension V1.

Le transpondeur 10 ainsi connecté fonctionne donc comme un transpondeur actif tel que décrit ci-dessus. Autrement dit, l'antenne 3 émet des signaux radioélectriques contenant des données destinées à être reçues par une station de base. Ces signaux sont fournis par le moyen de traitement 5 qui reçoit une tension d'alimentation Vdd continue égale à la tension V1, tant que cette dernière est inférieure au seuil Vth.

Considérons maintenant le cas où le moyen d'alimentation 7 fournit la tension V1 à une valeur qui est inférieure au seuil Vth. Dans ce cas, la valeur de tension fournie par le moyen d'alimentation 7 n'est plus suffisante pour assurer l'alimentation électrique du transpondeur 10, nécessaire pour réaliser des fonctions désirées. En conséquence, le moyen de traitement 5 commande au moyen de commutation 16 la blocage des transistors Ta et Tb, et la conduction des transistors Tc et Td. Ainsi la tension Vdd est sensiblement égale à la tension V2.

Le transpondeur 10 ainsi connecté fonctionne donc comme un transpondeur passif tel que décrit ci-dessus. Autrement dit, une station de base émet des signaux radioélectriques contenant des données et de l'énergie électrique. Quand le transpondeur 10 est placé au proche voisinage de la station de base, l'antenne 3 reçoit lesdites données qui sont alors traitées par le moyen de traitement 5, ainsi que de l'énergie électrique qui est ensuite stockée dans le moyen de stockage 12. En réponse, le moyen de traitement 5 fournit à l'antenne 3 d'autres données qui sont destinées à être reçues par la station de base. Ces signaux sont fournis par le moyen de traitement 5 qui reçoit une tension d'alimentation Vdd égale à la tension V2, cette tension provenant de l'énergie électrique stockée dans le moyen de stockage 12.

Considérons enfin le cas où le moyen de traitement 5 est programmé pour réaliser des fonctions spécifiques supplémentaires, comme cela est décrit ci-dessus. Une action extérieure au transpondeur 10 fournit ledit signal de commande spécifique, de sorte que l'antenne 3 reçoit ce signal. Le moyen de traitement 5 commande alors la commutation du transpondeur 10 en transpondeur passif, à l'instar du cas précédemment décrit.

L'homme de l'art note que l'agencement du moyen de commutation du transpondeur selon la présente invention, est avantageux, puisqu' il permet à ce transpondeur de déterminer si la valeur de tension fournie par la batterie est suffisante pour assurer son alimentation électrique, notamment pour réaliser les fonctions élémentaires désirées, par exemple la fourniture à distance d'un signal de commande de l'ouverture d'une porte de véhicule.

Il va de soi pour l'homme de l'art que la description détaillée ci-dessus peut subir diverses modifications sans sortir du cadre de la présente invention. A titre de variante, on peut réaliser le moyen de commutation du transpondeur selon la présente invention, en formant des transistors à effet de champ à canal de type N dans quatre caissons respectifs de type P faiblement dopé, ces caissons étant formés dans un substrat de silicium de type N faiblement dopé.

## Revendications

1. Transpondeur actif (10) comprenant :
- une antenne (3) agencée pour pouvoir recevoir et émettre au moins un signal radioélectrique contenant des données;
- un moyen de traitement (5) connecté à l'antenne, et agencé pour pouvoir recevoir et fournir à l'antenne des données d'identification à émettre sous forme de signal radioélectrique; et
- un moyen d'alimentation (7) agencé pour pouvoir fournir un signal d'alimentation électrique de l'ensemble des composants du transpondeur, ce transpondeur étant caractérisé en ce qu'il comprend en outre :
- un moyen de stockage (12) agencé pour pouvoir stocker de l'énergie électrique;
- un moyen de comparaison (14) connecté au moyen d'alimentation, et agencé pour pouvoir comparer la valeur de signal d'alimentation électrique fournie à une valeur prédéterminée (Vth); et
- un moyen de commutation (16) connecté au moyen de comparaison, au moyen de traitement, au moyen de stockage et au moyen d'alimentation, et agencé pour pouvoir connecter le moyen de traitement au moyen de stockage ou au moyen d'alimentation, en fonction du résultat de la comparaison.

2. Transpondeur actif (10) selon la revendication 1, caractérisé en ce que le moyen de traitement (5), le moyen de stockage (12), le moyen de comparaison (14) et le moyen de commutation (16) sont réalisés de façon monolithique dans un unique substrat semi-conducteur.

3. Transpondeur actif (10) selon la revendication 2, caractérisé en ce que l'antenne (3) est réalisée de façon monolithique dans ledit substrat.

4. Transpondeur actif (10) selon la revendication 2 ou 3, caractérisé en ce que le moyen de commutation (16) est formé dans un substrat de silicium de type P faiblement dopé, dans lequel sont formés des premier, deuxième, troisième et quatrième caissons de type N faiblement dopé, dans chacun desquels est formé respectivement un premier, deuxième, troisième ou quatrième transistor à effet de champ (Ta, Tb, Tc, Td) à canal de type P.

5. Transpondeur actif (10) selon la revendication 4, caractérisé en ce que les premier, deuxième, troisième et quatrième transistors (Ta, Tb, Tc, Td) sont connectées en série, en ce que les bornes de grille (Ga, Gb, Gc, Gd) des premier, deuxième, troisième et quatrième transistors sont connectés au moyen de traitement (5), en ce que les bornes de source (Sa, Sd) des premier et quatrième transistors (Ta, Td) sont connectées respectivement au moyen d'alimentation (7) et au moyen de stockage (12), et en ce que les bornes de drain (Db, Dc) des deuxième et troisième transistors (Tb, Tc) sont connectées au moyen de traitement (5) pour servir de borne d'alimentation électrique du moyen de traitement.

6. Transpondeur actif (10) selon la revendication 2 ou 3, caractérisé en ce que le moyen de commutation (16) est formé dans un substrat de silicium de type N faiblement dopé, dans lequel sont formés des premier, deuxième, troisième et quatrième caissons de type P faiblement dopé, dans chacun desquels est formé un premier, deuxième, troisième ou quatrième transistor à effet de champ à canal de type N.

7. Transpondeur actif (10) selon la revendication 6, caractérisé en ce que les premier, deuxième, troisième et quatrième transistors sont connectées en série, en ce que les bornes de grille des premier, deuxième, troisième et quatrième transistors sont connectés au moyen de traitement, en ce que les bornes de drain des premier et quatrième transistors sont connectées respectivement au moyen d'alimentation et au moyen de stockage, et en ce que les bornes de source des deuxième et troisième transistors sont connectées au moyen de traitement pour servir de borne d'alimentation électrique du moyen de traitement.

8. Dispositif portatif comprenant un transpondeur actif selon l'une quelconque des revendications précédentes.
